# DEMANDE DE BREVET EUROPEEN

(11) **EP 1 026 912 A1**
(43) Date de publication de la demande: **09.08.2000**
(21) Numéro de dépôt: 00400207.7
(22) Date de dépôt: 27.01.2000
(51) Int. Cl.: H04Q 11/00, H04L 12/56

(54) **Modules de commutation photonique, matrice de commutation comportant de tels modules**

(30) Priorité: 04.02.1999 FR 9901293
(71) Demandeur: ALCATEL, 75008 Paris (FR)
(72) Inventeur: Leboutté, Claude, 91220 Bretigny sur Orge (FR); Sotom, Michel, 75015 Paris (FR); Ollivier, François-Xavier, 91630 Guibeville (FR)
(74) Mandataire: Sciaux, Edmond

(57) **Abrégé**

La matrice comporte :
- un premier étage comportant r modules de commutation (DA1, ..., DAr) ayant chacun 2p² entrées et 2p.r sorties ;
- et un second étages comportant r modules de commutation (DB1,..., DBr) ayant chacun 2p.r entrées et 2p² sorties.

Les sorties du premier étage sont reliées à des entrées du second étage par des liaisons qui sont parallèles entre elles par groupes de 2p liaisons, ce qui réduit le nombre de points de croisement, et donc réduit l'encombrement. Ces liaisons sont réalisées au moyen de rubans de fibres optiques, si la matrice est réalisée en technologie photonique.

Applications aux réseaux de commutation photoniques.

## Description

L'invention concerne des modules de commutation permettant de réaliser un réseau de commutation non bloquant, plus particulièrement adapté pour la photonique. Elle peut cependant être utilisée aussi pour la réalisation de réseaux de commutation à technologie électronique.

Il est connu de réaliser un réseau de commutation non bloquant, ayant n.m entrées et n.m sorties, c'est à dire équivalent à une matrice à n.m entrées et n.m sorties, au moyens de plusieurs étages constitués chacun de matrices de commutation non bloquantes, de taille plus petite que celle du réseau à réaliser. Un réseau non bloquant est dit de Clos lorsqu'il comporte :
- un premier étage constitué de c matrices à a entrées et b sorties ;
- un deuxième étage constitué de b matrices à c entrées et c sorties ;
- et un troisième étage constitué de c matrices à b entrées et a sorties, avec b ≥ 2a-1.

Par exemple, l'article Multistage Optoelectronic Switch Networks, par R. I. Mac Donald et al, 8049j IEEE Proceedings-J Optoelectronics 141 (1994) June, No.3, Part J, Stevenage, Herts., GB, décrit un réseau de Clos à n.r entrées et n.r sorties, comportant trois étages :
- un premier étage constitué de r matrices à n entrées et 2n-1 sorties ;
- un deuxième étage constitué de 2n-1 matrices à r entrées et r sorties ;
- et un troisième étage constitué de r matrices à 2n-1 entrées et n sorties.

Les 2n-1 sorties de chaque matrice du premier étage sont reliées respectivement à une entrée de chacune des 2n-1 matrices du deuxième étage. Les 2n-1 entrées de chaque matrice du troisième étage sont reliées respectivement à une sortie de chacune des 2n-1 matrices du deuxième étage. Les matrices r x r constituant le deuxième étage sont elle-même des réseaux de Clos à trois étages. Ces matrices r x r comportent donc des liaisons d'interconnexion entre un premier et un deuxième étage d'une part, et entre ce deuxième étage et un troisième étage d'autre part. Lorsque ces matrices sont réalisées en technologie photonique, ces liaisons sont constituées de fibres optiques qui s'entrecroisent en de très nombreux points. L'encombrement de ces fibres qui s'entrecroisent constitue une limitation technologique qui rend pratiquement impossible la réalisation de réseaux de commutation optiques de taille supérieure à 128 x128. D'autre part, les réseaux de Clos connus ne peuvent pas être sous-équipés, c'est à dire qu'on ne peut pas se dispenser d'installer toutes les matrices de l'étage central même si on n'a pas besoin immédiatement de toute la capacité d'un réseau complet, parce que les réseaux connus ne peuvent pas fonctionner si une matrice de l'étage central est absente.

Le but de l'invention est de proposer une matrice qui puisse avoir une plus grande capacité, et un réseau de commutation qui puisse fonctionner même s'il est sous-équipé.

Un premier objet de l'invention est un premier type de module de commutation à 2p² entrées et 2p.r sorties, caractérisé en ce que ces entrées sont groupées par groupes de p entrées et ces sorties sont groupées par groupe de r sorties, chaque groupe d'entrées étant associé à un seul groupe de sorties ; et en ce qu'il comporte, pour chaque groupe d'entrées, des moyens pour établir au moins une connexion entre l'une quelconque des entrées de ce groupe d'entrées et l'une quelconque des sorties du groupe de sorties associé.

Un deuxième objet de l'invention est un second type de module de commutation à 2p.r entrées et 2p²sorties, caractérisé en ce que ces entrées sont groupées par groupes de r entrées et ces sorties sont groupées par groupe de p sorties, chaque groupe d'entrées étant associé à un seul groupe de sorties ; et en ce qu'il comporte, pour chaque groupe d'entrées, des moyens pour établir au moins une connexion entre l'une quelconque des entrées de ce groupe d'entrées et l'une quelconque des sorties du groupe de sorties associé.

Un troisième objet de l'invention est une matrice de commutation à 2r.p² entrées et 2r.p² sorties, caractérisée en ce qu'elle comporte :
- un premier étage comportant r modules de commutation du premier type;
- et un second étage comportant r modules de commutation du second type ;
en ce que les r sorties de choque second commutateur des modules de commutation du premier étage sont reliées respectivement à une entrée de chacun des premiers commutateurs des modules de commutation du second étage, de telle façon que la sortie de rang i d'un second commutateur ayant le rang j dans le module de commutation de rang k dans le premier étage de cette matrice est reliée à l'entrée de rang k du commutateur de rang j dans le module de commutation de rang i dans le deuxième étage de cette matrice.

La matrice ainsi caractérisée comporte des interconnexions, entre les r modules du premier étage et les r modules du second étage, qui s'entrecroisent mais qui sont parallèles entre elles par groupe de 2p liaisons. Il est donc possible d'utiliser des rubans groupant 2p fibres optiques parallèles. Ainsi le nombre de croisements est très réduit. Le gain réalisé sur l'encombrement permet de réaliser des matrices de taille plus grande, notamment 256 x 256 et 512 x 512.

Un quatrième objet de l'invention est un réseau de commutation modulaire, non bloquant, à n.m entrées et n.m sorties, caractérisé en ce qu'il comporte :
- un premier étage de m matrices à n entrées et 4.n.p sorties ;
- un deuxième étage de 2n matrices selon l'invention ; 2p sorties de chaque matrice du premier étage étant reliées respectivement à 2p entrées d'un module de commutation de chacune des 2n matrices du deuxième étage ;
- et un troisième étage de m matrices à 4.n.p entrées et n sorties ; 2p entrées de chaque matrice du troisième étage étant reliées respectivement à 2p sorties d'un module de commutation de chacune des 2n matrices du deuxième étage.

Le réseau ainsi caractérisé présente l'avantage de pouvoir fonctionner même s'il est sous-équipé.

L'invention sera mieux comprise et d'autres caractéristiques apparaîtront à l'aide de la description ci-dessous et des figures l'accompagnant :
- La **figure 1** représente le schéma synoptique d'un réseau ayant une structure connue.
- La **figure 2** représente le schéma synoptique d'un exemple de réseau comportant des matrices selon l'invention.
- La **figure 3** représente le schéma synoptique de ce même exemple de réseau lorsqu'il est sous-équipé en remplaçant les matrices selon l'invention par de simples châssis de brassage de fibres optiques.

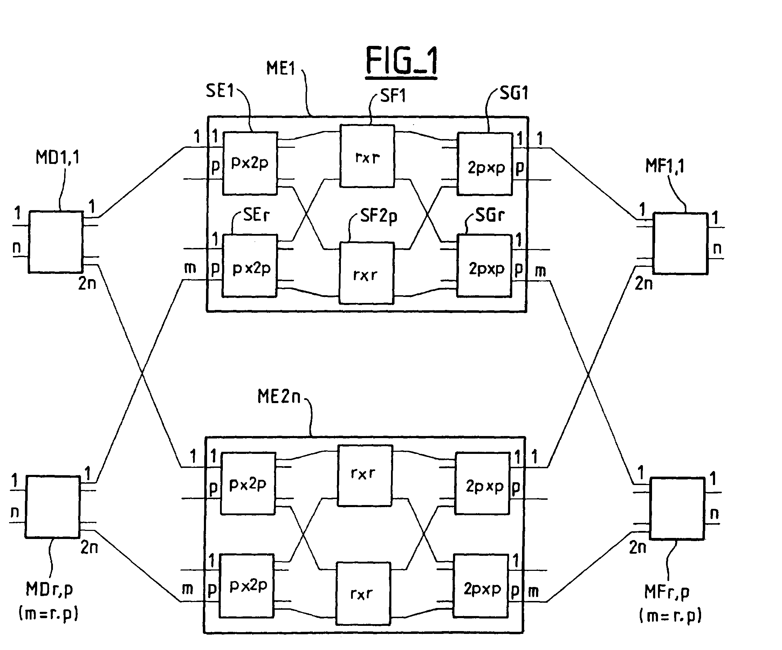

Le réseau représenté sur la **figure 1** est un réseau à n.m entrées et n.m sorties. Le nombre m est égal à r.p où r et p sont deux nombres entiers. Ce réseau comporte :
- un premier étage constitué de m matrices non bloquantes MD1, 1 ;... ; MDr,p , à n entrées et 2n sorties, ces entrées constituant les entrées du réseau ;
- un deuxième étage constitué de 2n matrices non bloquantes ME1, ..., ME2n, à m entrées et m sorties ;
- et un troisième étage constitué de m motrices non bloquantes MF1, 1 ;... ; MFr,p , à 2n entrées et n sorties, ces dernières constituant les sorties du réseau.

Les m entrées de chaque matrice du deuxième étage ME1, ..., ME2n, sont reliées respectivement à une sortie de chacune des matrices du premier étage MD1,1 ;...; MDr,p. Les m sorties de chaque matrice du deuxième étages ME1, ..., ME2n, sont reliées respectivement à une entrée de chacune des matrices du troisième étage MF1,1 ; ...; MFr,p.

Toutes les matrices du deuxième étage ont la même structure connue. Par exemple, la matrice ME1 comporte :
- un premier étage constitué de r matrices non bloquantes SE1,..,SEr, à p entrées et 2 p sorties ;
- un deuxième étage constitué de 2p matrices non bloquantes SF1, ...,SF2p, à r entrées et r sorties ;
- un troisième étage constitué de r matrices non bloquantes, SG1,..., SGr, à 2p entrées et p sorties.

Les 2p sorties de chaque matrice SE1,...,SEr du premier étage sont reliées respectivement à une entrée de chacune des matrices SF1, ...,SF2p du deuxième étage. Les r sorties de chaque matrice SF1,..., SF2p du deuxième étage sont reliées respectivement à une entrée de chacune des matrices SG1,..., SGr, du troisième étage. Chaque liaison est réalisée au moyen d'une fibre optique indépendante des autres puisque les liaisons partant d'une matrice donnée ne sont jamais parallèles entre elles mais sont divergentes.

Il est à remarquer que ces interconnexions ont un très grand nombre de points de croisement, puisqu'elles ne sont jamais parallèles entre elles. Ceci entraîne un encombrement croissant avec la capacité des matrices ME1,..., ME2n, cet encombrement limitant finalement la possibilité de réaliser un réseau de grande capacité en combinant plusieurs de ces matrices en un réseau.

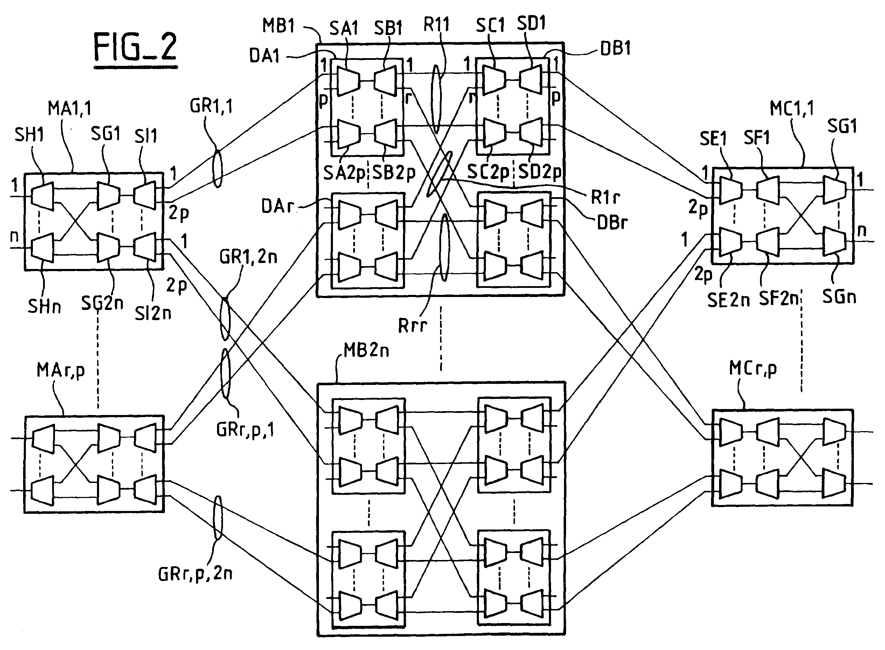

La **figure 2** représente le schéma synoptique d'un réseau de commutation non bloquant à n.m entrées et n.m sorties, comportant des matrices selon l'invention. Le nombre m est égal à r.p où r et p sont deux nombres entiers. Ce réseau comporte :
- un premier étage de m matrices bloquantes MA1,1 ;... ; MAs,t (non représentée) ;... ; MAr,p ayant chacune n entrées et 4.n.p sorties ;
- un deuxième étage de 2n matrices bloquantes MB1,...,MBj (non représentée),..., MB2n, ayant chacune 2p²r entrées et 2p²r sorties, et ayant la structure selon l'invention ;
- et un troisième étage de m matrices bloquantes MC1,1 ;... ; MCi,v (non représentée); .... ; MCr,p ayant chacune 4.n.p entrées et n sorties.

Le premier étage est relié au deuxième étage par 2n groupes de liaisons pour chaque module d'entrée, par exemple des groupes GR1,1 ,..., GR1,2n pour le module MA1,1 ; et GRr,p,1 ,... GRr,p,2n pour le module MAr,p. Le deuxième étage est relié au troisième étage par d'autres groupes de liaisons qui sont symétriques des précédents.

Les matrices MB1, ..., MBj (non représentée),..., MB2n, du deuxième étage ont toutes la même structure. Par exemple, la matrice MB1 comporte :
- un premier étage comportant r modules de commutation DA1, ..., DAr à 2p² entrées et 2p.r sorties ;
- et un second étage comportant r modules de commutation DB1, ..., DBr à 2p.r entrées et 2p² sorties.

Les r modules de commutation DA1, ..., DAs (non représenté),...,DAr, du premier étage de la matrice MB1ont la même structure. Par exemple, le module DA1 comporte :
-- 2p premiers commutateurs SA1, ..., SAi (non représenté), ..., SA2p ayant chacun p entrées et une sortie,
-- et 2p seconds commutateurs SB1, ..., SBj (non représenté),..., SB2p ayant chacun une entrée et r sorties ; ces seconds commutateurs étant respectivement associés aux premiers commutateurs SA1, ..., SA2p, la sortie d'un premier commutateur étant reliée à l'entrée d'un second commutateur qui lui est associé.

Les r modules de commutation DB1, ..., DBr du premier étage de la matrice MB1 ont tous la même structure. Par exemple, le module DB1 comporte :
-- 2p premiers commutateurs SC1, ..., SCj (non représenté), ..., SC2p, ayant chacun r entrées et une sortie ;
-- et 2p seconds commutateurs SD1,..., SDu (non représenté), ..., SD2p, ayant chacun une entrée et p sorties, la sortie d'un premier commutateur étant reliée à l'entrée d'un second commutateur qui lui est associé.

Les interconnexions entre le premier et le second étage de la matrice MB1, prise à titre d'exemple, sont les suivantes.

Les r sorties de chaque commutateur SB1, ...,SB2p de chaque module de commutation DA1, ..., DAr du premier étage sont reliées respectivement à une entrée de chacun des modules de commutation DB1,...,DBr du second étage. A titre d'exemple, considérons plus particulièrement les interconnexions entre les sorties de rangs 1, ..., i, ..., r du commutateur SB1 et les entrées des modules de commutation DB1, ... , DBr :
-- La sortie de rang 1 du commutateur SB1 est reliée à l'entrée de rang 1 du commutateur homologue de SC1 dans le module de commutation DB1.
-- La sortie de rang i du commutateur SB1 est reliée à l'entrée de rang 1 du commutateur homologue de SC1 dans le module de commutation DBi (non représenté).
-- La sortie de rang r du commutateur SB1 est reliée à l'entrée de rang 1 du commutateur homologue de SC1 dans le module de commutation DBr.

Considérons les interconnexions entre les sorties de rangs 1, ..., i, ..., r du commutateur SB2p du même module de commutation DA1, et les entrées des modules de commutation DB1, ... , DBr :
-- La sortie de rang 1 du commutateur SB2p est reliée à l'entrée de rang 1 du commutateur SC2p dans le module de commutation DB1.
-- La sortie de rang i du commutateur SB2p est reliée à l'entrée de rang 1 du commutateur homologue de SC2p dans le module de commutation DBi (non représenté).
-- La sortie de rang r du commutateur SB2p est reliée à l'entrée de rang 1 du commutateur homologue de SC2p dans le module de commutation DBr.

Les liaisons sont parallèles entre elles par groupes de 2p liaisons. Ces liaisons sont réalisées au moyen de rubans comportant chacun 2p fibres optiques parallèles. Par exemple, le module DA1 est relié aux modules DB1 , ... , DBr par r rubans R11, ..., R1r. La réduction du nombre de points de croisement et l'utilisation de rubans de fibres optiques réduit sensiblement l'encombrement des interconnexions, ce qui permet finalement de réaliser des matrices de plus grande capacité.

D'une façon générale, dans une matrice MBj, pour j = 1,..., ou 2n, la sortie de rang i du commutateur SBj (non représenté) du module de commutation DAk (non représenté) est reliée à l'entrée de rang k du commutateur SCj (non représenté) dans le module de commutation DBi (non représenté), pour i = 1 à r ; j = 1 à 2p ; k =1 à r.

Chaque matrice du premier étage, MA1,1 , par exemple, comporte :
- un premier étage de n commutateurs SH1,..., SH2n, ayant chacun une entrée et 2n sorties, cette entrée constituant une entrée du réseau ;
- un deuxième étage de 2n commutateurs SG1,..SG2n ayant chacun n entrées et une sortie ;
- un troisième étage de 2n commutateurs SI1,...,SIj (non représenté),..., SI2n, ayant chacun une entrée et 2p sorties.

Chacune des 2n sorties d'un commutateur du premier étage SH1,..., SH2n est reliée respectivement à une entrée de chacun des commutateurs du deuxième étage SG1,..SG2n. La sortie de chacun des commutateurs du deuxième étage SG1,..SG2n est reliée respectivement à l'entrée d'un commutateur du troisième étage SI1,..., SI2n.

Les 2p sorties du commutateur SI1de la matrice MA1,1 du premier étage, sont reliées respectivement à 2p entrées du module de commutation DA1 de la matrice MB1 du deuxième étage du réseau. Plus précisément, elles sont reliées respectivement aux entrées de rang 1 de chacun des commutateurs SA1, ..., SA2p du dispositif DA1.

Les 2p sorties du commutateur SI2n de la matrice MA1,1 du premier étage, sont reliées respectivement à 2p entrées d'un module de commutation homologue du dispositif DA1 mais dans la matrice MB2n du deuxième étage du réseau. Plus précisément, elles sont reliées respectivement aux entrées de rang 1 de chacun des commutateurs homologues des commutateurs SA1, ..., SA2p dans le module de commutation homologue du dispositif DA1 mais dans la matrice MB2n.

D'une manière générale, la sortie de rang i du commutateur SIj (non représenté) de la matrice MAs,t (non représentée) du premier étage, est reliée à l'entrée de rang t parmi les 2p entrées d'un commutateur (non représenté) homologue à SAi mais dans le module de commutation homologue de DAs (non représenté) dans la matrice MBj (non représenté) du deuxième étage du réseau, pour i = 1 à 2p ; j = 1 à 2n ; t = 1 à p ; s = 1 à r.

Les m matrices bloquantes MC1,1, ..., MCr,p à 4.n.p entrées et n sorties ont la même structure. La matrice MC1,1 , par exemple, comporte :
- un premier étage de 2n commutateurs SE1,..., SEj (non représenté),..., SE2n, ayant chacun 2p entrées et une sortie ;
- un deuxième étage de 2n commutateurs SF1,..SF2n, ayant chacun une entrée et n sorties ;
- un troisième étage de n commutateurs SG1,..SG2n ayant chacun 2n entrées et une sortie, cette dernière constituant une sortie du réseau.

L'entrée de chacun des commutateurs du deuxième étage SF1,..., SF2n est reliée respectivement à la sortie d'un commutateur du troisième étage SE1,..., SE2n. Chacune des 2n entrées d'un commutateur du troisième étage SG1,..., SG2n est reliée respectivement à la sortie de chacun des commutateurs du deuxième étage SF1,..SF2n.

2p entrées de chaque matrice MC1,1, ..., MCi,v (non représentée) , ..., MCr,p du troisième étage sont reliées respectivement à 2p sorties d'un commutateur analogue respectivement à SD1, ..., SDq (non représenté), ..., SD2p dans chaque module de commutation DB1,..., DBi (non représenté),..., DBr du deuxième étage de la matrice MB1. Plus précisément, l'entrée de rang q du commutateur SEj (non représenté) de la matrice MCi,v (non représentée), du troisième étage du réseau, est reliée à la sortie de rang v du commutateur SDq (non représenté) du module de commutation DBi (non représenté) de la matrice MBj (non représentée) du deuxième étage du réseau, pour q = 1 à 2p, v = 1 à p ; i = 1 à r ; j = 1 à 2n.

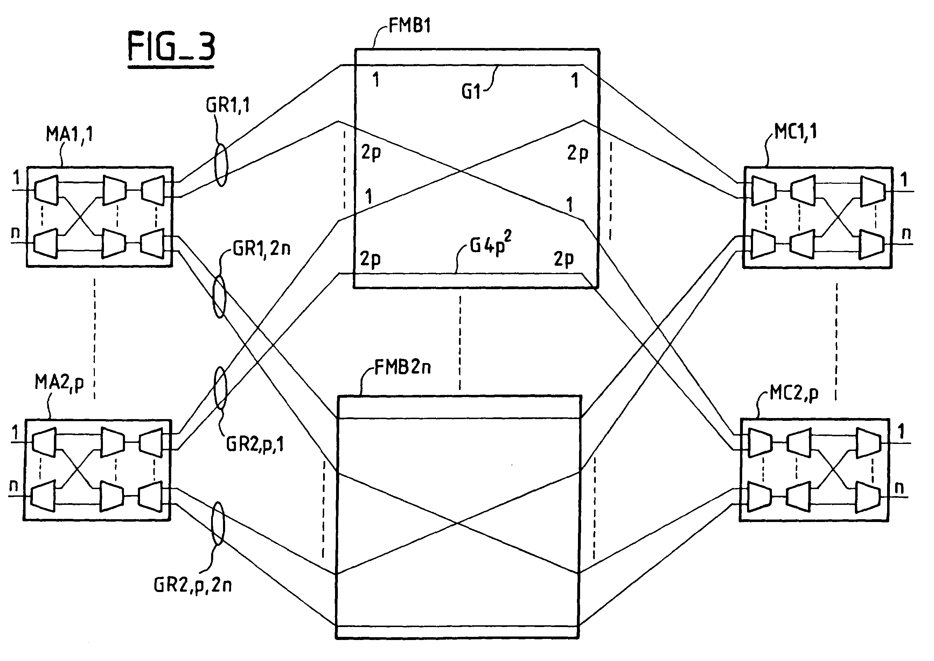

La **figure 3** représente le schéma synoptique de ce même exemple de réseau pour seulement 2np entrées et 2np sorties. Il est alors sous-équipé en remplaçant les matrices MB1, ..., MB2n par de simples châssis de brassage de fibres optiques, FMB1, ..., FMB2n ; en n'utilisant que m=2p modules MA1,1 , ..., MA2,p dans le premier étage ; et en n'utilisant que m=2p modules MC1,1 , ..., MC2,p dans le troisième étage.

Le premier étage est relié au deuxième étage par les 4np groupes de 2p liaisons : GR1,1 ,...GR1,2n ; ........ ; GR2,p,1 ,... GR2,p,2n. Le deuxième étage est relié au troisième étage par 4np groupes de 2p liaisons, ces groupes étant symétriques des précédents. On obtient ainsi un réseau de Clos à deux étages.

Les matrices MB1, ..., MB2n et les châssis de brassage de fibres optiques FMB1, ..., FMB2n sont équipés de connecteurs optiques permettant de les enficher et de les désenficher facilement sur un châssis supportant le réseau. La capacité du réseau selon l'invention peut donc être augmentée au cours du temps, en fonction des besoins, en remplaçant les châssis de brossage FMB1, ..., FMB2n par des matrices MB1, ...MB2n pour augmenter la capacité du réseau jusqu'à une capacité maximale de nrp entrées et nrp sorties.

Chaque châssis de brassage de fibres optiques FMB1, ..., FMB2n comporte 4p² entrées optiques et 4p² sorties optiques. Chaque entrée est respectivement reliée de manière permanente à une sortie, par un guide de lumière. Il y a donc 4p² guides de lumière G1, ..., G4p², constitués de fibres optiques dans cet exemple de réalisation.

Si on a besoin d'un nombre d'entrées-sorties plus faible que 2np, on peut partir de n entrées et n sorties, en équipant seulement MA1,1 et MC1,1, puis on peut augmenter le nombre de modules jusqu'à 2p pour augmenter la capacité du réseau jusqu'à 2np entrées et 2np sorties, par pas de n. Dans tous les cas, on équipe les 2n châssis de brassage de fibres, FMB1, ..., FMB2n.

Pour augmenter encore la capacité, on remplace les châssis de brassage de fibres FMB1, ..., FMB2n par 2n matrices MB1, ..., MB2n dont l'équipement en modules DA1, ..., DAr, et DB1, ..., DBr est progressif en fonction du nombre d'entrées et de sorties souhaité.

Par exemple, pour avoir np entrées et np sorties, on utilise : p modules MA1,1 ,...., MA1,p ; une rangée DA1-DB1 dans chaque matrice MB1, ..., MB2n ; et p modules de sortie MC1,1 , ..., MC1,p.

Pour avoir entre np+1 et 2np entrées-sorties, on utilise : entre p+1 et 2p modules MA1,1 ,..., MA1,p+1 (jusqu'à MA1,2p) ; deux rangées DA1-DB1, DA2-DB2, dans chaque matrice MB1, ..., MB2 ; et entre p+1 et 2p modules de sortie MC1,1, ... MC1,p+1 (jusqu'à MC1,2p).

On rajoute ensuite une rangée dans chacune des matrices MB1, ..., MB2n pour chaque augmentation de np entrées-sorties.

Le réseau selon l'invention peut-être réalisé avec des matrices d'un autre type pour constituer le premier étage MA1,1 ,..., MAr,p , pourvu que ce soit des matrices à n entrées et 4n.p sorties, permettant d'établir au moins une connexion entre chacun des 2n groupes de 2p sorties et l'une quelconque des n entrées.

Le réseau selon l'invention peut-être réalisé avec des matrices d'un autre type pour constituer le troisième étage MC1,1 ,..., MCr,p , pourvu que ce soit des matrices à 4n.p entrées et n sorties, permettant d'établir au moins une connexion entre chacun des 2n groupes de 2p entrées et l'une quelconque des n sorties.

## Revendications

1. Module de commutation (DA1, ..., DAr) à 2p² entrées et 2p.r sorties, caractérisé en ce que ces entrées sont groupées par groupes de p entrées et ces sorties sont groupées par groupe de r sorties, chaque groupe d'entrées étant associé à un seul groupe de sorties ; et en ce qu'il comporte, pour chaque groupe d'entrées, des moyens (SA1, ..., SA2p, SB1, ..., SB2p) pour établir au moins une connexion entre l'une quelconque des entrées de ce groupe d'entrées et l'une quelconque des sorties du groupe de sorties associé.

2. Module selon la revendication 1, caractérisé en ce que les moyens pour établir au moins une connexion entre l'une quelconque des entrées d'un groupe d'entrées et l'une quelconque des sorties du groupe de sorties associé comportent :
- un premier commutateur (SA1, ..., SA2p) ayant p entrées et une sortie, ces entrées constituant des entrées du module ;
- et un second commutateur (SB1, ..., SB2p) ayant une entrée et r sorties, la sortie du premier commutateur étant reliée à l'entrée du second commutateur qui lui est associé, et les sorties de ce second commutateur constituant des sorties du module.

3. Module de commutation (DB1, ..., DBr) à 2p.r entrées et 2p²sorties, caractérisé en ce que ces entrées sont groupées par groupes de r entrées et ces sorties sont groupées par groupe de p sorties, chaque groupe d'entrées étant associé à un seul groupe de sorties ; et en ce qu'il comporte, pour chaque groupe d'entrées, des moyens (SC1, ..., SC2p, SD1, ..., SD2p) pour établir une connexion entre l'une quelconque des entrées de ce groupe d'entrées et l'une quelconque des sorties du groupe de sorties associé.

4. Module selon la revendication 3, caractérisé en ce que les moyens pour établir une connexion entre l'une quelconque des entrées d'un groupe d'entrées et l'une quelconque des sorties du groupe de sorties associé comportent :
- un premier commutateur (SC1, ..., SC2p) ayant r entrées et une sortie, ces entrées constituant les entrées du module ;
- et un second commutateur (SD1, ..., SD2p) ayant une entrée et p sorties, la sortie du premier commutateur étant reliée à l'entrée du second commutateur qui lui est associé, et les sorties de ces seconds commutateurs constituant des sorties du module.

5. Matrice de commutation (MB1, ..., MB2n) à 2r.p² entrées et 2r.p² sorties, caractérisée en ce qu'elle comporte :
- un premier étage comportant r modules de commutation (DA1, ..., DAr) selon l'une des revendications 1 ou 2,
- et un second étage comportant r modules de commutation (DB1, ..., DBr) selon l'une des revendications 3 ou 4 ;
et en ce que les r sorties de chaque second commutateur (SB1, ...,SB2p) des modules de commutation (DA1, ..., DAr) du premier étage sont reliées respectivement à une entrée de chacun des premiers commutateurs (SC1,..., SC2p) des modules de commutation (DB1 ,..., DBr) du second étage, de telle façon que la sortie de rang i d'un second commutateur (SB1 ,.., SB2p) ayant le rang j dans le module de commutation (DA1,... , DAr) de rang k dans le premier étage de cette matrice (MB1) est reliée à l'entrée de rang k du commutateur (SC1,..., SC2p) de rang j dans le module de commutation (DB1,..., DBr) de rang i dans le deuxième étage de cette matrice (MB1).

6. Matrice de commutation selon la revendication 5, à composants optiques, caractérisée en que les r sorties de chaque second commutateur (SB1, ...,SB2p) de chaque module de commutation (DA1, ..., DAr) du premier étage de cette matrice (MB1) sont reliées respectivement à une entrée de chacun des premiers commutateurs (SC1,..., SC2p) des modules de commutation (DB1,...,DBr) du second étage, au moyen d'une pluralité de rubans (R11, ..., Rrr) comportant chacun 2p fibres optiques parallèles.

7. Réseau de commutation modulaire non bloquant, à n.m entrées et n.m sorties, caractérisé en ce qu'il comporte :
- un premier étage de m matrices (MA1,1 ;... ; MAr,p) à n entrées et 4.n.p sorties ;
- un deuxième étage de 2n matrices (MB1,..., MB2n) selon l'une des revendications 5 ou 6 ; 2p sorties de chaque matrice (MA1,1 ; ... ; MAr,p ) du premier étage étant reliées respectivement à 2p entrées d'un module de commutation (DA1,..., DAr) du premier étage de chacune des 2n matrices (MB1,..., MB2n) du deuxième étage du réseau ;
- et un troisième étage de m matrices (MC1,1 ,..., MCr,p ) à 4.n.p entrées et n sorties ; 2p entrées de chaque matrice (MC1,1 ,..., MCr,p) du troisième étage étant reliées respectivement à 2p sorties d'un module de commutation (DB1,.., DBr) du deuxième étage de chacune des 2n matrices (MB1,..., MB2n) du deuxième étage du réseau.

8. Châssis de brassage de fibres optiques (FMB1, ..., FMB2n) destiné à remplacer une matrice (MB1,..., MB2n) du deuxième étage du réseau selon la revendication 7, caractérisé en ce qu'il comporte 4p² entrées optiques et 4p² sorties optiques respectivement reliées de manière permanente par 4p² guides de lumière (G1, ..., G4p²), et en ce que ces entrées et ces sorties sont munies de connecteurs permettant d'enficher ou de désenficher l'ensemble du châssis de brassage de fibres, à la place d'une matrice (MB1, ..., MB2n) du deuxième étage du réseau selon la revendication 7.

9. Réseau de commutation modulaire non bloquant, à 2n.p entrées et 2n.p sorties, caractérisé en ce qu'il comporte :
- un premier étage de 2p matrices (MA1,1 ;... ; MA2,p) à n entrées et 4.n.p sorties ;
- un deuxième étage de 2n châssis selon la revendication 8 ; 2p sorties de chaque matrice (MA1,1 ; ... ; MAr,p ) du premier étage étant reliées respectivement à 2p entrées de chacun des 2n châssis (FMB1, ..., FMB2n) du deuxième étage du réseau ;
- et un troisième étage de 2p matrices (MC1,1 ,..., MC2,p ) à 4.n.p entrées et n sorties ; 2p entrées de chaque matrice (MC1,1 ,..., MC2,p) du troisième étage étant reliées respectivement à 2p sorties de chacun des 2n châssis (FMB1, ..., FMB2n) du deuxième étage du réseau.

10. Réseau selon la revendication 7 ou la revendication 9, caractérisé en ce que chacune des m matrices (MA1,1 ,..., MAr,p) à n entrées et 4.n.p sorties, du premier étage de ce réseau, comporte :
- un premier étage de n commutateurs (SH1,..SHn), ayant chacun une entrée et 2n sorties ;
- un deuxième étage de 2n commutateurs (SG1,..SG2n) ayant chacun n entrées et une sortie ;
- un troisième étage de 2n commutateurs (SI1,..., SI2n) ayant chacun une entrée et 2p sorties ;
en ce que chacune des 2n sorties d'un commutateur de ce premier étage (SH1,..SHn) est reliée respectivement à une entrée de chacun des commutateurs du deuxième étage (SG1,..SG2n) ;
et en ce que la sortie de chacun des commutateurs de ce deuxième étage (SG1,..SG2n) est reliée respectivement à l'entrée d'un commutateur du troisième étage (SI1,..., SI2n).

11. Réseau selon la revendication 7 ou la revendication 9, caractérisé en ce que chacune des m matrices (MC1,1 ,..., MCr,p) à 4.n.p entrées et n sorties, du troisième étage de ce réseau, comporte :
- un premier étage de 2n commutateurs (SE1,..., SE2n) ayant chacun 2p entrées et une sortie ;
- un deuxième étage de 2n commutateurs (SF1,..., SF2n), ayant chacun une entrée et n sorties;
- un troisième étage de n commutateurs (SG1,..., SGn) ayant chacun 2n entrées et une sortie ;
en ce que l'entrée de chacun des commutateurs du deuxième étage (SF1,..SF2n) est reliée respectivement à la sortie d'un commutateur du premier étage (SE1,..., SE2n) ;
et en ce que chacune des 2n entrées d'un commutateur du troisième étage (SG1,..., SGn) est reliée respectivement à une sortie de chacun des commutateurs du deuxième étage (SF1,..., SF2n).
